# EUROPEAN PATENT APPLICATION

(11) **EP 4 813 757 A1**
(43) Date of publication of application: **30.09.2026**
(21) Application number: 26156223.5
(22) Date of filing: 04.02.2026
(51) Int. Cl.: B60R 16/02, B60R 16/023

(54) **VEHICLE REAR SECTION STRUCTURE**

(30) Priority: 26.03.2025 JP 2025052164
(71) Applicant: Toyota Jidosha Kabushiki Kaisha, Toyota-shi, Aichi-ken 471-8571 (JP)
(72) Inventor: YONEZAWA, Shota, Toyota-shi, Aichi-ken, 471-8571 (JP); HORIGUCHI, Kotaro, Toyota-shi, Aichi-ken, 471-8571 (JP)
(74) Representative: TBK

(57) **Abstract**

A vehicle rear section structure, including: a battery case including an upper case and a lower case for housing one or more battery cells inside; a connector block that includes an indentation open at a lower side in a vehicle height direction when viewed from a vehicle width direction and that is connected to a rear end portion in a vehicle front-rear direction of the lower case; and a connector that includes at least a portion housed in the indentation of the connector block and that is supported by the connector block.

## Description

### BACKGROUND

### Technical Field

The present disclosure relates to a vehicle rear section structure.

### Related Art

A battery pack disclosed in Japanese Patent Application Laid-Open (JP-A) No. 2023-046977 is configured by plural battery cells with smoke vents housed in a battery case.

When installing the battery pack described in JP-A No. 2023-046977 to a vehicle, various components need to be laid out in an area at a rear side of the battery case, and securing placement space for the components is difficult.

### SUMMARY

The present disclosure provides a vehicle rear section structure capable of using placement space at a rear side of a battery case efficiently.

A vehicle rear section structure according to the present disclosure of a first aspect includes a battery case including an upper case and a lower case for housing one or more battery cells inside, a connector block that includes an indentation open to a vehicle height direction lower side when viewed from a vehicle width direction and that is connected to a vehicle front-rear direction rear end portion of the lower case, and a connector that includes at least a portion housed in the indentation of the connector block and that is supported by the connector block.

In the vehicle rear section structure according to the present disclosure of the first aspect, at least a portion of the connector is housed in the indentation of the connector block connected to the rear end portion of the lower case, and so this enables the connector to be aggregated at the vehicle rear side. This enables the placement space at the rear side of the battery case to be used efficiently.

A vehicle rear section structure according to the present disclosure of a second aspect is the configuration of the first aspect, wherein the connector has an upper face portion in the vehicle height direction that is supported by the connector block.

In the vehicle rear section structure according to the present disclosure of the second aspect, the upper face portion of the connector is supported by the connector block, and so there is no need to provide a member at the vehicle front-rear direction and vehicle width direction for use in support. This means that the connector can be supported in the indentation of the connector block, while an increase in installation space in the vehicle front-rear direction and vehicle width direction is suppressed.

A vehicle rear section structure according to the present disclosure of a third aspect is the configuration of the first aspect or the second aspect, wherein the lower case includes a lower plate in the vehicle height direction and a rear plate extending upward from a rear end of the lower plate in the vehicle front-rear direction, and is formed such that the rear end portion of the lower case extends rearward from the rear plate.

In the vehicle rear section structure according to the present disclosure of the third aspect, the rear end portion of the lower case is formed extended rearward from the rear plate that has extended upward from the rear end of the lower plate, and so the rear end portion is positioned one step above the lower plate. This means that a space is formed at the lower side of the rear end portion, enabling the placement space at the vehicle rear side to be used efficiently by installing the connector block in this space.

A vehicle rear section structure according to the present disclosure of a fourth aspect is the configuration of the third aspect, wherein the rear end portion of the lower case includes an opening passing through the rear end portion in the vehicle height direction, the connector block is thermoconductive and includes a protrusion at which the indentation is formed and that is mounted to the opening, and an extension portion extended outward from a vehicle height direction lower end of the protrusion, and the lower case is abutted against an upper face of the extension portion.

In the vehicle rear section structure according to the present disclosure of the fourth aspect, the connector block is thermoconductive, the protrusion of the connector block is mounted to the opening provided in the rear end portion of the lower case, and the lower case is abutted against the upper face of the extension portion, such that the lower case is not abutted against at least the upper face of the protrusion. This thereby enables an area not abutted by the lower case to be secured on the connector block, and so a heat dissipation area is secured on the connector block. This thereby enables internal heat of the battery case to be efficiently dissipated through the connector block.

A vehicle rear section structure according to the present disclosure of a fifth aspect is the configuration of the fourth aspect, wherein the connector block includes a lower extension portion extended downward from a vehicle front-rear direction front end of the extension portion, and the rear plate of the lower case is abutted against the lower extension portion.

In the vehicle rear section structure according to the present disclosure of the fifth aspect, the lower case is abutted against the upper face of the extension portion of the connector block at the lower extension portion, thereby enabling contact surface area between the lower case and the connector block to be increased compared to cases in which the lower case is not abutted against the lower extension portion. This thereby enables internal heat of the battery case to be efficiently dissipated through the connector block.

A vehicle rear section structure according to the present disclosure of a sixth aspect is the configuration of any one of the first aspect to the third aspect, wherein the connector block is made from aluminum.

In the vehicle rear section structure according to the present disclosure of the sixth aspect, the connector block is made from aluminum, and so the internal heat of the battery case dissipated from the lower case can be efficiently dissipated by the connector block.

The vehicle rear section structure according to the present disclosure exhibits the excellent advantageous effect of enabling efficient use of placement space at a rear side of a battery case.

### BRIEF DESCRIPTION OF THE DRAWINGS

Exemplary embodiments of the present disclosure will be described in detail based on the following figures, wherein:
Fig. 1 is a schematic plan view illustrating a vehicle rear section structure according to the present exemplary embodiment;
Fig. 2 is a side view cross-section illustrating an example of a vehicle rear section structure according to the present exemplary embodiment;
Fig. 3 is an enlarged perspective view illustrating an enlargement of relevant portions of a vehicle rear section structure according to the present exemplary embodiment; and
Fig. 4 is a schematic enlarged cross-section of an example of an attachment method of a connector and a connector block.

### DETAILED DESCRIPTION

Description follows regarding a vehicle rear section structure 14 of an exemplary embodiment of the present disclosure, with reference to the drawings. Note that the following description will focus mainly on areas needed to describe the technology disclosed herein, and areas where description is omitted are known technology. Note that the same reference numerals will be appended across the drawings to the same or equivalent members, and duplicate explanation thereof will be omitted. Furthermore, when there are plural of the same or equivalent members included in the drawings, reference numerals will sometimes only be appended to some thereof in order to enhance the clarity of the drawings. Note that arrow FR, arrow UP, and arrow LH in the drawings respectively indicate vehicle forward, vehicle upward, and vehicle leftward directions of a vehicle 10. Unless explicitly stated otherwise, reference in the following description to front and rear, up and down, and left and right directions respectively indicate front and rear in the vehicle front-rear direction, up and down in the vehicle height direction, and left and right in the vehicle width direction (left-right direction).

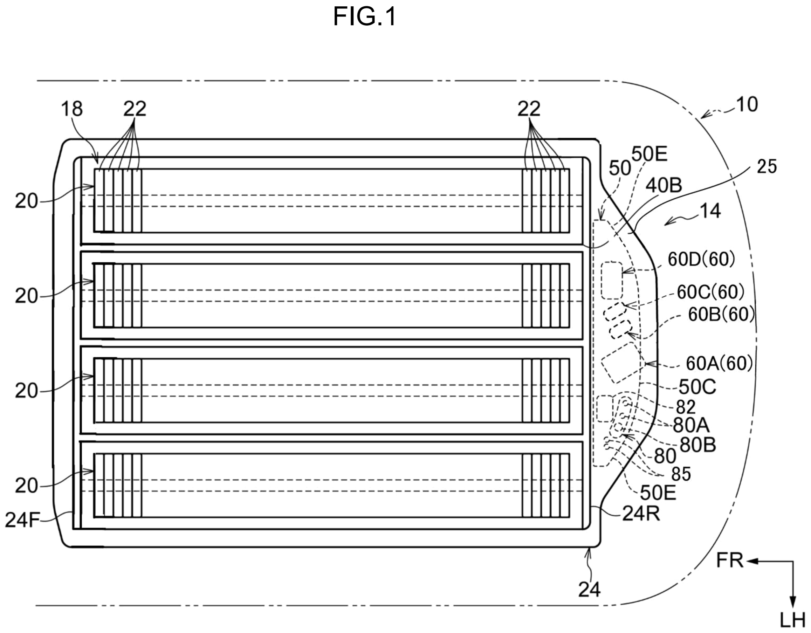

Fig. 1 is a partial schematic plan view illustrating an example of a vehicle 10 provided with the vehicle rear section structure 14 according to the present exemplary embodiment. Note that an upper case 26, described later, is omitted from illustration in Fig. 1.

As illustrated in Fig. 1, a storage battery pack 18 is installed to the vehicle 10. The storage battery pack 18 includes plural (four in the present exemplary embodiment) storage battery modules 20. The plural storage battery modules 20 are arranged alongside each other in the vehicle width direction. Each of the storage battery modules 20 includes plural storage battery cells 22 serving as battery cells. The plural storage battery cells 22 are arranged in the storage battery modules 20 alongside each other in the vehicle front-rear direction. Namely, the storage battery pack 18 is configured by the plural storage battery modules 20 arranged alongside each other in the vehicle width direction, with each of the storage battery modules 20 including the plural storage battery cells 22 arranged alongside each other in the vehicle front-rear direction.

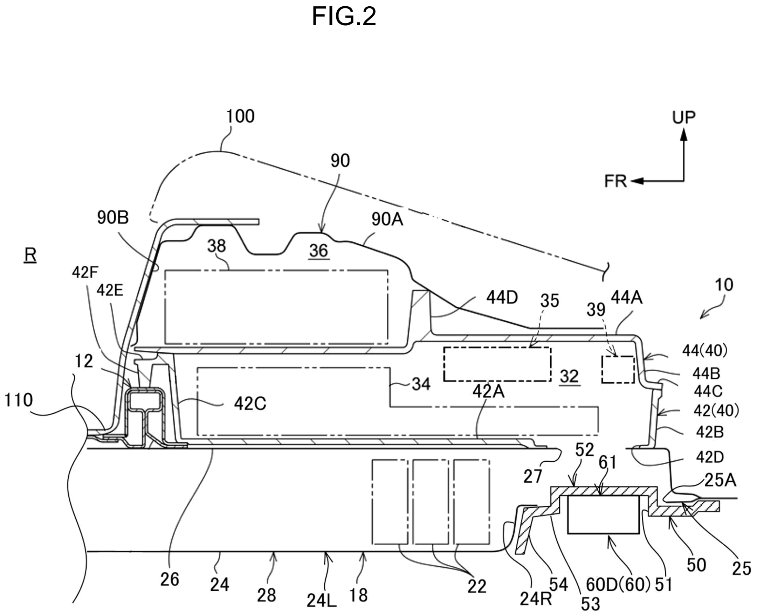

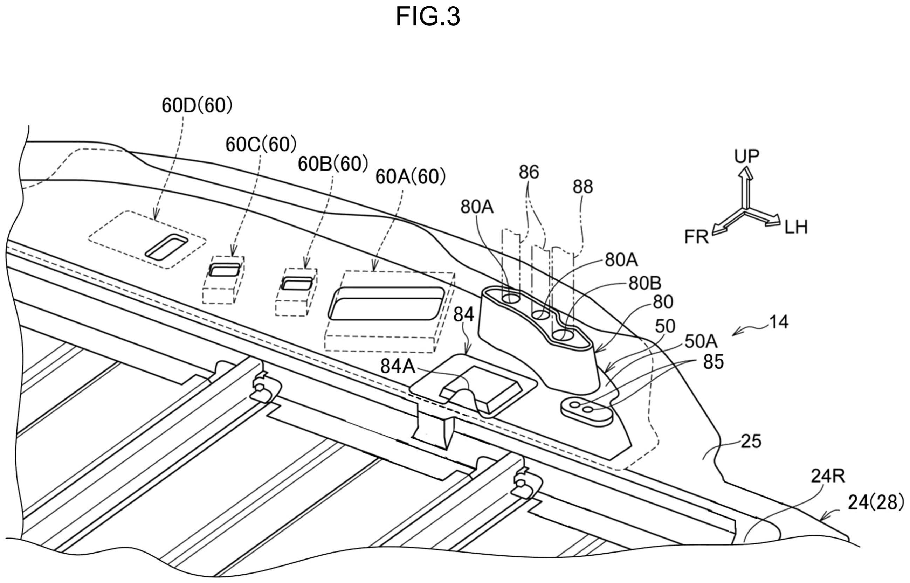

Fig. 2 is a side view cross-section illustrating an example of a vehicle rear section structure according to the present exemplary embodiment. As illustrated in Fig. 2, the storage battery pack 18 includes a lower case 24 and an upper case 26. The lower case 24 is a box shaped member capable of accommodating the storage battery modules 20, and is configured including a lower plate 24L, a front plate 24F (see Fig. 1), a rear plate 24R, and a left-right pair of side plates (omitted in the drawings). The lower plate 24L is a plate shaped region that supports the storage battery modules 20 from below. The front plate 24F and the rear plate 24R are plate shaped regions that are respectively provided projecting upward from a front side and a rear side of the lower plate 24L. The side plates are plate shaped regions provided projecting upward from each of the two vehicle width direction sides of the lower plate 24L. The upper face of the lower case 24 is open and, as illustrated in Fig. 1, the lower case 24 includes a flange 25 (see Fig. 3) serving as a rear end portion that juts out toward the outside from a peripheral edge thereof.

The upper case 26 is a lid shaped member for closing off the upper face of the lower case 24. As illustrated in Fig. 2, an opening 27 is formed in a rear end portion of the upper case 26. An equipment placement space 32 of an equipment case 40, described later, and the inside of the storage battery pack 18, are in communication with each other through the opening 27.

The periphery of the lower case 24 and the periphery of the upper case 26 are joined together, with a storage battery case 28 serving as a battery case being configured by the lower case 24 and the upper case 26. The plural storage battery modules 20 configured from the plural storage battery cells 22 are housed in the space inside the storage battery case 28 alongside each other in the vehicle width direction.

As illustrated in Fig. 2, the equipment case 40 housing various equipment is arranged above the storage battery case 28 on a right (R) side of a cabin. The equipment case 40 includes an equipment pedestal 42 and a lid 44. The equipment pedestal 42 is a casing formed in a box shape open at a vehicle upper side, namely having an open upper end.

The equipment pedestal 42 includes a lower wall 42A that is arranged at an upper face of the upper case 26 of the storage battery case 28 and that extends along the upper case 26, a back wall 42B that extends upward from a rear end of the lower wall 42A, and a front wall 42C that extends upward from a front end of the lower wall 42A. An opening 42D is formed in a region on the rear side of the lower wall 42A, with a harness and the like, omitted in the drawings, passing through the opening 42D. The equipment pedestal 42 includes a front flange 42E that extends forward from an upper end of the front wall 42C, and a boss 42F that projects downward from a region on the front side of the front flange 42E.

A front end portion of the equipment pedestal 42 is fixed to a cross member 12 by screwing non-illustrated bolts, which have been inserted from above through the front flange 42E and the boss 42F of the equipment pedestal 42, into non-illustrated nuts provided to the cross member 12. Note that the cross member 12 is part of a vehicle framework, and extends along the vehicle width direction so as to couple a pair of rockers (omitted in the drawings) together.

In the present exemplary embodiment, as in the example illustrated in Fig. 2, the equipment pedestal 42 is formed such that the back wall 42B has an upper end positioned further to the lower side than the upper end of the front wall 42C.

The substance from which the equipment pedestal 42 is made is not particularly limited, however, from the perspective of raising performance in the dissipation of heat from the heat emitting equipment such as relays, a junction box 34, and the like, as described later, the equipment pedestal 42 is preferably made from aluminum. Namely, the substance from which the equipment pedestal 42 is made is preferably a substance having a high thermal conductivity such as aluminum or an aluminum alloy. Moreover, the equipment pedestal 42 is more preferably a die-cast member (casting) formed by casting aluminum or the like. Note that the equipment pedestal 42 does not need to be a casting, and may alternatively be formed by a metal (for example aluminum or stainless steel) sheet material or from a resin or the like. Heat from heat emitting equipment such as relays, the junction box 34, and the like is dissipated to the equipment pedestal 42 even when the equipment pedestal 42 is formed from a metal sheet material or resin.

The lid 44 is positioned overlapping with a seat cushion 100 when viewed from above, as described later, and is arranged at a vehicle height direction lower side of the seat cushion 100 and at a vehicle height direction upper side of the storage battery case 28. Specifically, the lid 44 is a seal member for closing off an opening (opening portion) at an upper end of the equipment pedestal 42, and is fixed to the equipment pedestal 42 using non-illustrated fastening members. The lid 44 includes an upper wall 44A that extends in the front-rear direction and left-right direction, a rear wall 44B that extends downward from a rear end of the upper wall 44A, and a rear flange 44C that extends rearward from a lower end of the rear wall 44B. The lid 44 also includes an upper projection 44D that projects upward from a front-rear direction intermediate portion of the upper wall 44A.

The lid 44 is thermoconductive, and is preferably formed from a substance having a high thermal conductivity such as aluminum, for example. Namely, the substance from which the lid 44 is made is a substance having a high thermal conductivity such as aluminum or an aluminum alloy. Note that the lid 44 may be formed from a metal (for example aluminum or stainless steel) sheet material, or from a resin or the like that has a rigidity of the same order as that of a metal. Heat from heat emitting equipment such as relays or the like is still dissipated to the equipment pedestal 42 when the equipment pedestal 42 is formed from a metal sheet material or resin or the like. The lid 44 may also be formed from a die-cast member (casting) formed by casting aluminum or the like.

The equipment placement space 32 is formed between the lid 44 and the equipment pedestal 42 by the lid 44 being attached to the equipment pedestal 42 from above. The junction box 34 (control device), ECU (control device) 35, and the like are arranged in this equipment placement space 32. Namely, the equipment case 40 for housing the junction box 34 and the like inside is formed by joining a lower end portion of the lid 44 to the equipment pedestal 42. Note that the junction box 34 is supported by the upper face of the lower wall 42A of the equipment pedestal 42, and is fixed to the lower wall 42A of the equipment pedestal 42 by non-illustrated fixing members.

Although not illustrated in the drawings, a relay, auxiliary equipment, and the like are provided inside the junction box 34. Such auxiliary equipment includes, for example, a power distribution unit (PDU), an electronic control unit (ECU), and the like. The relay and auxiliary equipment are coupled to the storage battery pack 18 by a wiring pipe 88 (see Fig. 3) of a wiring harness or the like, described later, and are electrically connected to the storage battery pack 18. The heat emitting equipment such as relays and the like are driven by power supplied from the storage battery pack 18.

The equipment case 40 housing the junction box 34 and the like is partially disposed above the upper case 26 of the storage battery case 28. An example of "partially disposed" is illustrated by being disposed at a vehicle front-rear direction part (for example a rear side) of the storage battery case 28 that extends in the vehicle front-rear direction and the width direction.

An auxiliary equipment cover 90 is formed with a thinner thickness than that of the equipment pedestal 42 and the lid 44 described above, such as by pressing a steel sheet material. The auxiliary equipment cover 90 includes an upper wall 90A disposed so as to face the upper wall 44A of the lid 44 along the vehicle height direction, and a front wall 90B that extends downward from a front end of the upper wall 90A.

The auxiliary equipment cover 90 is attached to the lid 44 from the upper side, and an equipment placement space 36 is formed between the auxiliary equipment cover 90 and the lid 44. A charger 38, such as a 2-IN-1 charger or the like for example, is disposed in the equipment placement space 36 at a front side of the upper projection 44D. In the present exemplary embodiment, the charger 38 is supported by an upper face at the vehicle front-rear direction front side of the upper wall 44A of the lid 44, is specifically supported by the upper face of the upper wall 44A further toward the front side than the upper projection 44D, and is fixed to the upper face of the upper wall 44A of the lid 44 through non-illustrated fixing members. Moreover, as illustrated in Fig. 1 and Fig. 2, the lid 44 is installed between the junction box 34 and the charger 38.

A seat cushion 100 configuring part of a vehicle rear seat is provided at the upper side of the auxiliary equipment cover 90. The seat cushion 100 is disposed at the vehicle height direction upper side of a vehicle rear section of the storage battery case 28. A carpet 110 is provided at the lower side of the seat cushion 100, with the carpet 110 covering the equipment case 40 and the cross member 12 from the front side thereof.

As illustrated in Fig. 2, a connector block 50 is connected to the flange 25 of the lower case 24. In other words, as illustrated in Fig. 1, the connector block 50 is disposed at the vehicle rear side of the lower case 24. A front edge (vehicle front side edge) of the connector block 50 has a straight-line profile oriented along the vehicle width direction. In contrast thereto, a rear edge (vehicle rear side edge) of the connector block 50 is curved such that a vehicle width direction center thereof is convex toward the vehicle rear. This means that a vehicle width direction central portion 50C of the connector block 50 is longer in the vehicle front-rear direction than the two vehicle width direction end portions 50E thereof.

Moreover, as illustrated in Fig. 2, the connector block 50 includes an indentation 51 open downward in the vehicle height direction when viewed along the vehicle width direction, and a protrusion 52 formed by the indentation 51. Moreover, the connector block 50 also includes an extension portion 53 that extends toward the outside from a lower end of the protrusion 52, and a lower extension portion 54 that extends downward from a front end of the extension portion 53.

An opening 25A is provided so as to penetrate through the flange 25 of the lower case 24 in the vehicle height direction, and the protrusion 52 of the connector block 50 is mounted to this opening 25A. In other words, the connector block 50 is fixed to peripheral edge portions of the opening 25A.

A lower face of the flange 25 of the lower case 24 is abutted against an upper face of the extension portion 53 of the connector block 50. In other words, the upper face of the extension portion 53 of the connector block 50 is abutted against a lower face of a peripheral edge portion of the opening 25A. Moreover, in the present exemplary embodiment, a rear end face of the rear plate 24R of the lower case 24 is abutted against a front end face of the lower extension portion 54 of the connector block 50. Note that although in Fig. 2 there is a gap formed between the rear end face of the rear plate 24R of the lower case 24 and the front end face of the lower extension portion 54 of the connector block 50, and between the lower face of the flange 25 of the lower case 24 and the upper face of the extension portion 53 of the connector block 50, in reality these actually respectively abut each other.

In the present exemplary embodiment, the connector block 50 is formed by a thermoconductive member, and specifically, as an example, is made from aluminum. The substance from which the connector block 50 is made is preferably a substance having a high thermal conductivity such as aluminum or an aluminum alloy. The connector block 50 is more preferably a die-cast member (casting) formed by casting aluminum or the like. Note that the connector block 50 is not necessarily a casting, and may alternatively be formed by a metal (for example aluminum or stainless steel) sheet material or from a resin or the like.

Fig. 3 is a schematic enlarged perspective view illustrating an enlargement of relevant portions of the vehicle rear section structure 14 according to the present exemplary embodiment, and is a perspective view of the lower case 24 illustrated from the rear plate 24R side.

As illustrated in Fig. 1, a smoke vent 82 is attached to the connector block 50. As illustrated in Fig. 3, a covering plate 84 is attached on the connector block 50, which is disposed between the connector block 50 and a region extending from the storage battery pack 18 to the smoke vent 82. A side face on the storage battery cells 22 side of the covering plate 84 is provided with a window 84A for inflow of smoke discharged from inside the storage battery cells 22. Note that the smoke vent 82 is opened when smoke has inflowed into a smoke discharge channel (omitted in the drawings) provided in the storage battery pack 18 and the internal pressure has risen to a specific value or greater, thereby externally discharging gas that was inside the smoke exhaust channel.

Furthermore, a breathable membrane 85 is also attached to the connector block 50. The breathable membrane 85 is configured so as to prevent passage of liquids (including vapor) while allowing the passage of gases. Gor-Tex (registered trademark) or the like may be employed, for example, as the material thereof. Moreover, the breathable membrane 85 is formed such that in cases in which gas passes therethrough, due to the breathable membrane 85 causing a resistance resisting gas movement to act, such gas does not move all at once over a short period of time. In the present exemplary embodiment, the breathable membrane 85 is provided at a position further to the vehicle width direction outside than the smoke vent 82.

Moreover, as illustrated in Fig. 1 to Fig. 3, plural connectors 60 that are connected to the storage battery pack 18 for supplying power to each vehicle section are arranged at a lower face side of the connector block 50. In the present exemplary embodiment, as an example, the plural connectors 60 include a first connector 60A, a second connector 60B, a third connector 60C, and a fourth connector 60D. Note that in the following description the first connector 60A, the second connector 60B, the third connector 60C, and the fourth connector 60D are simply called connectors 60 when common features are being described without discriminating therebetween.

The connectors 60 are each attached to a terminal of a cable (omitted in the drawings). As illustrated in Fig. 1 and Fig. 3, the plural connectors 60 are arrayed along the vehicle width direction. The plural connectors 60 are each arranged so as to, as a whole, be overlapping with part of the storage battery case 28 in bottom view. As illustrated in Fig. 2, the connectors 60 are each disposed so as not to project further to the lower side than the lower face of the lower plate 24L of the storage battery case 28. Moreover, the plural connectors 60 are, as illustrated in Fig. 1, disposed with the first connector 60A on the smoke vent 82 side, and with the second connector 60B, the third connector 60C, and the fourth connector 60D arranged so as to lie on the opposite side of the first connector 60A to the smoke vent 82 side thereof.

The first connector 60A is connected through a cable or the like to equipment disposed in a vehicle front section. This equipment is, for example, a vehicle drive motor installed in a front section of the vehicle 10.

The fourth connector 60D is connected through a cable or the like to equipment disposed in a vehicle rear section. This equipment is, for example, a vehicle drive motor installed in the vehicle rear section. This equipment is, for example, disposed at a vehicle width direction central position further rearward than a rear end of the storage battery pack 18. In the present exemplary embodiment, this equipment is, as illustrated in Fig. 2, the junction box 34 (control device), an ECU (control device) 35, and the like that have been laid out in the equipment placement space 32.

As an example, as illustrated in Fig. 2, the fourth connector 60D is attached to a lower side of the flange 25 of the lower case 24. Specifically, the fourth connector 60D is attached from the lower side to a portion of the lower case 24 further to the rear side than the storage battery cells 22. More specifically, the fourth connector 60D is attached to the connector block 50 from below. In other words, at least an upper portion of the fourth connector 60D is housed in the indentation 51 of the connector block 50, with an upper face portion 61 thereof supported by the connector block 50.

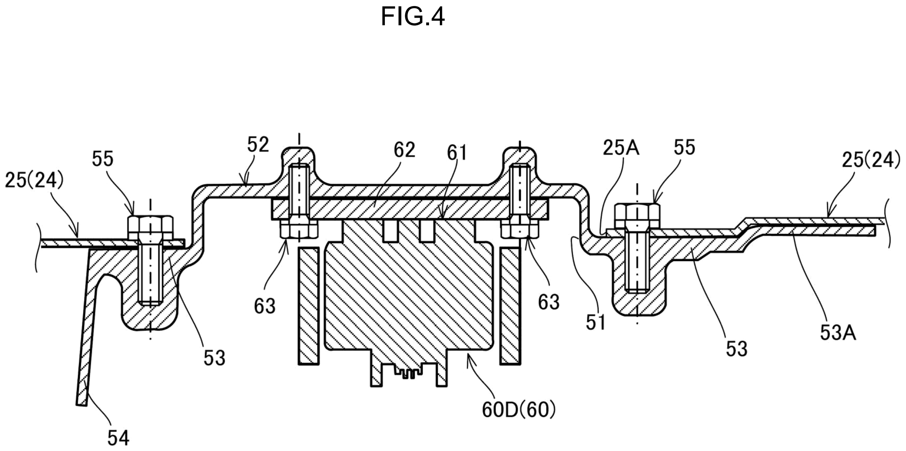

Fig. 4 is a schematic enlarged cross-section of an example of an attachment method of the fourth connector 60D and the connector block 50. Note that in Fig. 4, the fourth connector 60D is, as an example, configured by a PIN connector. As illustrated in Fig. 4, the flange 25 of the lower case 24is fixed to the upper face of the extension portion 53 by fastening members 55, such as bolts.

Moreover, the upper face portion 61 of the fourth connector 60D is supported by the lower face of the protrusion 52 of the connector block 50, with a connector terminal block 62 interposed therebetween. Specifically, the connector terminal block 62 for attaching the fourth connector 60D to is fixed to the connector block 50 by fastening members 63, such as bolts or the like, from the lower side. Note that the connector terminal block 62 is electrically connected, through non-illustrated bus bars, a power distribution unit 39, described later, and the like, to the junction box 34 and the like that are disposed in the equipment placement space 32.

In the present exemplary embodiment, as an example, the connector block 50 is positioned with a rear end portion 53A of the extension portion 53 slightly further upward than the extension portion 53 on the protrusion 52 side. Namely, the extension portion 53 includes a step. Similarly for the lower case 24, a rear end portion of the flange 25 is positioned slightly further upward than the protrusion 52 side thereof, namely than the opening 25A of the flange 25. Namely, the flange 25 includes a step. When viewed from above, the upper case 26 includes an area that overlaps with the rear end portion 53A of the extension portion 53 and is joined to the lower case 24, as illustrated in Fig. 3. In other words, at a rear end portion of the storage battery case 28, the connector block 50, the lower case 24, and the upper case 26 are overlapped and abutted against each other.

Note that similarly to the fourth connector 60D, the first connector 60A, the second connector 60B, and the third connector 60C may also be attached to the connector block 50.

Moreover, the storage battery pack 18 also includes the power distribution unit 39 housed in the storage battery case 28. The power distribution unit 39 is connected through non-illustrated bus bars to the junction box 34 and the like disposed in the equipment placement space 32, and is also connected to the plural connector terminal blocks 62 through non-illustrated bus bars. The power distribution unit 39 thereby functions so as to distribute power for use by the plural connectors 60 provided.

The power distribution unit 39 is arranged further rearward than the storage battery cells 22 and the junction box 34, so as not to be overlapping with the storage battery cells 22 and the junction box 34 when viewed from above.

The smoke vent 82 and the breathable membrane 85 are also provided at the vehicle width direction outside of the connector block 50 and, as illustrated in Fig. 3, a routing block 80 is formed further to the vehicle rear side than the smoke vent 82 and the breathable membrane 85. The routing block 80 is provided so as to project upward from an upper face 50A of the connector block 50, and has a flattened tube shape, flattened in the vehicle front-rear direction.

Specifically, the routing block 80 has a profile longer in the vehicle width direction than in the vehicle front-rear direction when viewed from above the vehicle, and is provided at an outer edge side of the connector block 50. The routing block 80 is configured with a substantially truncated cone shape when viewed from the vehicle outside, with a cross-section profile sectioned along the horizontal direction that increases on progression toward the vehicle lower side.

Moreover, first insertion holes 80A and a second insertion hole 80B are formed at the inside of the routing block 80 with circular shapes that penetrate through the connector block 50 in the height direction. In the present exemplary embodiment, there are two of the first insertion holes 80A, and the second insertion hole 80B is a single hole with a larger diameter than the first insertion holes 80A. Moreover, the second insertion hole 80B is provided further to the vehicle width direction outside than the first insertion holes 80A. The two first insertion holes 80A are separated from each other in the vehicle width direction, and the second insertion hole 80B is also separated from the first insertion holes 80A in the vehicle width direction.

Circulation pipes 86, for example for circulating cooling water to equipment installed to the vehicle, are inserted through the first insertion holes 80A. A wiring pipe 88 housing plural wires transmitting electrical signals to installed equipment is inserted through the second insertion hole 80B. The circulation pipes 86 and the wiring pipe 88 are examples of routing members routed in the vehicle. Namely, in the present exemplary embodiment, plural routing members separated from each other in the vehicle width direction configure a structure inserted along the height direction through the routing block 80.

### Operation and Advantageous Effects

Next, description follows regarding the operation and advantageous effects of the present exemplary embodiment.

In the vehicle rear section structure 14 according to the present exemplary embodiment, at least a portion of the connectors 60 is housed in the indentation 51 of the connector block 50 connected to the flange 25 of the lower case 24, thereby enabling the connectors 60 to be aggregated at the vehicle rear side. This accordingly enables the placement space at the rear side of the storage battery case 28 to be used efficiently. Moreover, the lower case 24 is abutted against the thermoconductive connector block 50, and so internal heat of the storage battery case 28 can be efficiently dissipated through the connector block 50.

Moreover, in the vehicle rear section structure 14 according to the present exemplary embodiment, the upper face portions 61 of the connectors 60 are supported by the connector block 50, and so there is no need to provide a member at the vehicle front-rear direction and vehicle width direction for use in support. This means that at the indentation 51 of the connector block 50, the connectors 60 can be supported while an increase of the installation space in vehicle front-rear direction and vehicle width direction is suppressed.

Moreover, in the vehicle rear section structure 14 according to the present exemplary embodiment, the flange 25 of the lower case 24 is formed so as to extend to the rear side from the rear plate 24R extended upward from the rear end of the lower plate 24L, and so the flange 25 is positioned one step above the lower plate 24L. This means that a space is formed at a lower side of the flange 25, enabling the placement space at the vehicle rear side to be used efficiently by installing the connector block 50 in this space.

Moreover, in the vehicle rear section structure 14 according to the present exemplary embodiment, the protrusion 52 of the connector block 50 is mounted to the opening 25A provided to the flange 25 of the lower case 24, and the lower face of the flange 25 is abutted against the upper face of the extension portion 53 of the connector block 50, and so the lower case 24 is not abutted against at least the upper face of the protrusion 52. An area not abutted by the lower case 24 can accordingly be secured on the connector block 50, and so a heat dissipation area is secured on the connector block 50. This means that the internal heat of the storage battery case 28 can be efficiently dissipated through the connector block 50.

Moreover, in the vehicle rear section structure 14 according to the present exemplary embodiment, the lower face of the flange 25 of the lower case 24 is abutted against the upper face of the extension portion 53 of the connector block 50, and the rear face of the rear plate 24R of the lower case 24 is abutted against the front face of the lower extension portion 54. This means that contact surface area between the lower case 24 and the connector block 50 can be increased compared to cases in which the lower case 24 is not abutted against the lower extension portion 54. This thereby enables internal heat of the storage battery case 28 to be efficiently dissipated through the connector block 50.

Moreover, in the vehicle rear section structure 14 according to the present exemplary embodiment, the connector block 50 is made from aluminum, and so internal heat of the storage battery case 28 dissipated from the lower case 24 can be dissipated efficiently by the connector block 50.

Note that some of the above-described configuration of the present exemplary embodiment may be omitted or modified.

Although the present disclosure has been described by way of an exemplary embodiment, the present disclosure is not limited thereto, and obviously various other modifications may be implemented within a scope not departing from the spirit thereof.

## Claims

1. A vehicle rear section structure comprising:
a battery case (28) including an upper case (26) and a lower case (24) for housing one or more battery cells (22) inside;
a connector block (50) that includes an indentation (51) open at a lower side in a vehicle height direction when viewed from a vehicle width direction and that is connected to a rear end portion (25) in a vehicle front-rear direction of the lower case (24); and
a connector (60) that includes at least a portion housed in the indentation (51) of the connector block (50) and that is supported by the connector block (50).

2. The vehicle rear section structure according to claim 1, wherein the connector (60) has an upper face portion (61) in the vehicle height direction that is supported by the connector block (50).

3. The vehicle rear section structure according to claim 1 or claim 2, wherein the lower case (24) includes a lower plate (24L) in the vehicle height direction and a rear plate (24R) extending upward from a rear end, in the vehicle front-rear direction, of the lower plate (24L), and the rear end portion (25) of the lower case (24) extends rearward from the rear plate (24R).

4. The vehicle rear section structure according to claim 3, wherein:
the rear end portion (25) of the lower case (24) includes an opening (25A) passing through the rear end portion (25) in the vehicle height direction;
the connector block (50) is thermoconductive and includes a protrusion (52) at which the indentation (51) is formed and that is mounted to the opening (25A), and an extension portion (53) extending outward from a lower end in the vehicle height direction of the protrusion (52); and
the lower case (24) is abutted against an upper face of the extension portion (53).

5. The vehicle rear section structure according to claim 4, wherein:
the connector block (50) includes a lower extension portion (54) that extends downward from a front end, in the vehicle front-rear direction, of the extension portion (53); and
the rear plate (24R) of the lower case (24) is abutted against the lower extension portion (54).

6. The vehicle rear section structure according to any one of claims 1 to 3, wherein the connector block (50) is made from aluminum.
